# EUROPÄISCHE PATENTSCHRIFT

(11) **EP 0 715 019 B1**
(45) Veröffentlichungstag und Bekanntmachung des Hinweises auf die Patenterteilung: **17.05.2000**
(21) Anmeldenummer: 95115593.6
(22) Anmeldetag: 04.10.1995
(51) Int. Cl.: D21G 9/00, D21F 1/02, D21F 3/06, D21F 5/06, D21G 1/00

(54) **Verfahren und Vorrichtung zum Behandeln einer Materialbahn**
Method and device for treating a web
Procédé et dispositif pour traiter une bande de matériau

(30) Priorität: 01.12.1994 DE 4442746
(43) Veröffentlichungstag der Anmeldung: 05.06.1996
(73) Patentinhaber: Voith Sulzer Finishing GmbH, 47803 Krefeld (DE)
(72) Erfinder: Conrad, Hans-Rolf, D-41539 Dormagen (DE); Leigraf, Reinhard, D-47929 Grefrath (DE)
(74) Vertreter: Knoblauch, Andreas, Dr.-Ing.

(56) Entgegenhaltungen:
- US-A- 4 514 913
- US-A- 5 122 232

## Beschreibung

Die Erfindung betrifft ein Verfahren zum Behandeln einer Materialbahn mit Hilfe einer sich über die Materialbahnbreite erstreckenden Behandlungseinrichtung, an der die Materialbahn in Längsrichtung vorbeibewegt wird und die in Querrichtung in mehrere, einzeln ansteuerbare benachbarte Zonen unterteilt ist, bei dem hinter der Behandlungseinrichtung in Querrichtung ein Ist-Profil eines vorbestimmten Zielparameters ermittelt wird, das Ist-Profil mit einem Soll-Profil des Zielparameters verglichen wird und die Zonen der Behandlungsvorrichtung in Abhängigkeit von Unterschieden zwischen Ist-Profil und Soll-Profil angesteuert werden. Ferner betrifft die Erfindung eine Anordnung zum Behandeln einer Materialbahn, die in Längsrichtung an einer Behandlungseinrichtung vorbeiläuft, die sich in Querrichtung zur Materialbahn über die Materialbahnbreite erstreckt und in Querrichtung in mehrere benachbarte Zonen unterteilt ist, die einzeln ansteuerbar sind.

Ein derartige Verfahren und eine derartige Vorrichtung sind aus US-A-5 122 232 bekannt. Die Behandlung besteht im bekannten Fall darin, daß Feuchtigkeit auf die vorbeilaufende Materialbahn aufgetragen wird.

US-A-4 514 913 zeigt eine Vorrichtung zum Trocknen einer vorbeilaufenden Bahn mit einzelnen Modulen, die quer zur Laufrichtung verschoben werden können, um jeweils die Streifen mit der höchsten Feuchtigkeit zu trocknen. Die Summe der Breite der zur Verfügung stehenden Module quer zur Laufrichtung der Bahn ist deutlich geringer als die Breite der Bahn.

Unter dem Begriff "Behandeln einer Materialbahn" sollen alle gezielt vorgenommenen Einwirkungen auf die Materialbahn verstanden werden, die geeignet sind, charakteristische Kennwerte oder Zielparameter der Materialbahn zu beeinflussen. Bei einer Papierbahn sind dies beispielsweise die Dicke, der Bulk, die Glätte, der Glanz, die Feuchtigkeit oder ähnliches. Derartige Parameter können mit bekannten Meßeinrichtungen erfaßt werden. Zur Behandlung dienen ebenfalls bekannte Behandlungsvorrichtungen, beispielsweise Kalander oder andere Walzenanordnungen, bei denen die Materialbahn durch mindestens einen Walzenspalt geführt wird, Heizeinrichtungen, die entweder direkt oder indirekt über eine Behandlungswalze auf die Materialbahn wirken, Dampf- oder Düsenfeuchter, die die Feuchtigkeit und die Temperatur der Materialbahn beeinflussen, oder Stoffauflaufspindeln, mit denen bei einer Papierbahn die Pulpe auf das Sieb aufgebracht wird. Es ist bekannt, daß man derartige Behandlungseinrichtungen in Querrichtung der Materialbahn in Zonen unterteilt, um die Intensität oder die Wirkung der Behandlung in Querrichtung zumindest abschnittsweise einzeln einstellen oder regeln zu können. Durch die steuerbare Intensität der einzelnen Zonen ist man in der Lage, einen Streifen in Bahnlaufrichtung, der nicht dem Sollwert des Zielparameters entspricht, in Richtung des Sollwertes zu verändern. Durch die Einstellmöglichkeit der einzelnen Zonen kann man durch Veränderung der Intensität der Behandlung oder der Korrektur ein Profil des Zielparameters der Materialbahn in Querrichtung einstellen. Dieses eingestellte oder Ist-Profil sollte möglichst genau einem vorgegebenen oder vorgebbaren Soll--Profil entsprechen. Für die oben gegebenen Beispiele könnten demnach die Auftragsmenge von Dampf oder Flüssigkeit, die Heiz- oder Kühlleistung, die Blendenverstellung der Stoffauflaufspindeln oder der Druck partiell zum Erreichen eines bestimmten Zielparameters über die Bahnbreite variiert werden. Hierbei möchte man vielfach erreichen, daß das Profil des Zielparameters über die Materialbahnbreite konstant ist.

Das Ergebnis der Beeinflussung wird in der Regel mit einem Querprofilmeßsystem überprüft, das entweder kontinuierlich oder diskret arbeitet, wobei auch im Falle einer diskreten Messung, d.h. einer Messung des Zielparameters an verschiedenen, über die Breite der Materialbahn verteilten Punkten, eine wesentlich größere Anzahl von Meßpunkten erfaßt wird, als Zonen vorhanden sind.

Hierbei entsteht das Problem, daß eine Sollwertabweichung in der Materialbahn, die sich über die Randbereiche zweier benachbarter Behandlungszonen erstreckt, nur beseitigt werden kann, indem neue Sollwertabweichungen mit umgekehrtem Vorzeichen in den Materialbahnabschnitten unter den beiden Behandlungszonen geschaffen werden, die die ursprüngliche Sollwertabweichung überlagern. In diesem Fall erhält man zwar an der Stelle der ursprünglich im Bereich der Grenze zwischen zwei benachbarten Behandlungszonen vorhandenen Sollwertabweichung einen Ausgleich. Da aber die Einstellung die gesamte Zonenbreite erfaßt, ergibt sich eine entsprechende Veränderung des Ist-Profils auch in den Bereichen, die zuvor näher am Sollwert waren, also eine kleinere Sollwertabweichung aufwiesen. Durch das Ausregeln der Sollwertabweichung im Grenzbereich zwischen zwei Zonen kann sich also ingesamt eine Verschlechterung des Ist-Profils des Zielparamters ergeben.

Der Erfindung liegt die Aufgabe zugrunde, die Möglichkeiten zur Querprofil-Einstellung eines Zielparameters zu verbessern.

Diese Aufgabe wird bei einem Verfahren der eingangs genannten Art dadurch gelöst, daß zur Verringerung der Unterschiede die Behandlungseinrichtung und die Materialbahn in Querrichtung relativ zueinander verschoben werden.

Mit dieser Maßnahme erweitert man die Möglichkeiten der Einflußnahme durch die Behandlungseinrichtung. Man kann nämlich nicht mehr nur die Intensität der Behandlung verändern, also beispielsweise den Druck im Walzenspalt, die Menge der aufgetragenen Flüssigkeit oder des aufgetragenen Dampfes, die Menge der abgegebenen Wärme- oder Kälteleistung, sondern auch den Ort, an dem die einzelnen Zonen auf die Materialbahn wirken. Man erhält hierdurch eine zusätzliche Steueroder Regelgröße, die es in vielen Fällen erlaubt, Abweichungen zwischen Soll- und Ist-Profil auch in Bereichen zu kompensieren, die auf der Grenze zwischen zwei benachbarten Zonen liegen, ohne daß bei dieser Verbesserung im Grenzbereich das Querprofil des Zielparameters in den übrigen Bahnabschnitten drastisch verschlechtert wird.

In einer bevorzugten Ausgestaltung wird vor jedem Verschieben jede Zone zunächst so eingestellt, daß die Abweichungen zwischen Soll- und Ist-Profil minimiert werden. Eine derartige Einstellung läßt sich beispielsweise dadurch erreichen, daß die Summe der Fehlerquadrate minimiert wird. Man arbeitet also zunächst so weiter, wie das herkömmlich der Fall war, d.h. man versucht, in jeder Zone eine möglichst gute Annäherung des Ist-Profils an das Soll-Profil des Zielparameters zu erreichen. Wenn man nun die Abweichungen in Querrichtung der Materialbahn aufträgt, wird man in vielen Fällen auch bei diesem Vorgehen Spitzen feststellen, an denen die Abweichungen am größten sind. Diese Spitzen können nun durch das Verschieben der Materialbahn und der Behandlungseinrichtung relativ zueinander weiter verringert werden.

Hierzu kann man in einer bevorzugten Ausgestaltung des Verfahrens die Behandlungseinrichtung und die Materialbahn so zueinander verschieben, daß ein vorbestimmter oder aufgrund der Lage oder Größe der größten Abweichung ermittelbarer Punkt einer Zone an den Ort der größten Abweichung zwischen Soll- und Ist-Profil verbracht wird. Insbesondere kann in einer besonders bevorzugten Ausgestaltung dieser Punkt die Mitte einer Zone sein, d.h. die Mitte einer Zone wird an den Ort der größten Abweichung verschoben. Hierbei trägt man dem Umstand Rechnung, daß in vielen Fällen, die Abweichung zwischen Soll- und Istwert nicht als singuläre Spitze in Erscheinung tritt, sondern sich eine derartige Störung in einer über die Breite der Materialbahn aufgetragenen Kurve als sich mehr oder weniger stetig entwickelnde Erhebung darstellt. Wenn nun die Mitte der Zone (oder ein anderer für die gewünschten Zwecke geeigneter Punkt der Zone) über das Maximum der Abweichung verschoben wird, ist damit zu rechnen, daß der Ausgleich zwischen Soll- und Istwert, d.h. die Minimierung der Unterschiede, insgesamt am besten bewerkstelligt werden kann.

Als eine bevorzugte Ausgestaltung des Verfahrens hat sich folgende Vorgehensweise erwiesen: Nach dem Verschieben wird
a) eine zweite Summe der Fehlerquadrate zwischen Soll- und Istwert gebildet und mit einer vor dem Verschieben gebildeten ersten Summe der Fehlerquadrate verglichen,
b) wenn die zweite Summe kleiner als die erste Summe ist, wird der Ort der größten Abweichung zwischen Soll- und Ist-Profil ermittelt und der Punkt der Zone an den Ort der größten Abweichung verschoben,
c) wenn die zweite Summe der Fehlerquadrate größer als die erste Summe der Fehlerquadrate ist, wird die Verschiebung rückgängig gemacht,
d) die Schritte a) bis c) werden solange wiederholt, bis Schritt c) notwendig wird. Bei diesem Vorgehen nähert man sich iterativ demjenigen Ist-Profil an, das dem Soll-Profil am nächsten kommt.

Die Aufgabe wird bei einer Anordnung der eingangs genannten Art dadurch gelöst, daß die Materialbahn und die Behandlungseinrichtung in Querrichtung relativ zueinander verschiebbar sind.

Wie oben ausgeführt, erhält man mit der Querverschiebbarkeit von Materialbahn und Behandlungseinrichtung relativ zueinander einen zusätzlichen Parameter, mit dem man einen Einfluß auf das Ist-Profil nehmen kann. Dieser zusätzliche Parameter ist nun der Angriffsort der Einflußnahme durch die Behandlungseinrichtung. Man kann damit gezielter auf Abweichungen zwischen Soll- und Ist-Profil reagieren, ohne gleichzeitig eine Verschlechterung, d.h. eine Vergrößerung der Abweichungen in anderen Bereichen in Kauf nehmen zu müssen.

Vorzugsweise sind die Behandlungseinrichtung und die Materialbahn um mindestens die Breite einer Zone gegeneinander verschiebbar. Bei dieser Ausgestaltung ist sichergestellt, daß tatsächlich die gesamte Materialbahnbreite in die verbesserte Behandlung einbezogen werden kann.

Bevorzugterweise sind die Materialbahn und die Behandlungseinrichtung in entgegengesetzte Richtungen um mindestens die Breite einer halben Zone gegeneinander verschiebbar. Insgesamt ergibt sich hierbei die Verschiebbarkeit um eine ganze Zone. Man verbessert hierdurch aber die Reaktionsgeschwindigkeit, weil man von einer "Neutralstellung" ausgehen kann, so daß auch bei Abweichungen am Rand einer Zone nur ein Weg zurückzulegen ist, der der Breite einer halben Zone entspricht.

Für die Verschiebbarkeit gibt es nun verschiedene Möglichkeiten. So kann in einer ersten bevorzugten Ausgestaltung eine gegenüber der Behandlungseinrichtung in Querrichtung changierbare Auf- und Abwickeleinrichtung für die Materialbahn vorgesehen sein. Eine derartige changierbare Auf- und Abwickeleinrichtung an sich ist bekannt. Sie wird beispielsweise bei Soft-Kalandern, d.h. Walzenanordnungen mit mindestens einer weichen Walze, dazu eingesetzt, um zu verhindern, daß sich die Materialbahnkante in die Oberfläche der weichen Walze einläuft. Bei den bekannten Changiervorrichtungen spielt allerdings der zu beeinflussende Zielparameter bzw. dessen Einstellung keine Rolle.

In einer anderen bevorzugten Ausgestaltung ist die Materialbahn in Querrichtung stationär geführt und die Behandlungseinrichtung ist gegenüber der Materialbahn bewegbar. In vielen Fällen ist die Behandlungseinrichtung leichter und besser zu handhaben als die Auf- und Abwickeleinrichtung. Aufgrund ihres geringeren Gewichts läßt sich die Behandlungseinrichtung schneller beschleunigen.

Vorzugsweise ist die Behandlungseinrichtung in Querrichtung von einem Exzenterstößel angetrieben. Mit einem derartigen Antrieb läßt sich die Position der Behandlungseinrichtung relativ zur Walzenbahn relativ leicht einstellen. Darüber hinaus ist die Rückmeldung dieser Position über die Winkelstellung des Exzenterstößels möglich.

In einer anderen bevorzugten Ausgestaltung weist die Behandlungseinrichtung ein mit einer Zahnstange kämmendes und antreibbares Ritzel auf. Die Zahnstange erstreckt sich dann in Querrichtung der Materialbahn.

In allen Fällen ist es von Vorteil, wenn zum Antrieb der Behandlungseinrichtung ein Schrittmotor vorgesehen ist. Hiermit erhält man eine relativ gute Auflösung der Positionseinstellung.

Die Erfindung wird im folgenden anhand von bevorzugten Ausführungsbeispielen in Verbindung mit der Zeichnung beschrieben. Hierin zeigen:
- Fig. 1: eine perspektivische Ansicht einer Anordnung zum Behandeln einer Materialbahn,
- Fig. 2: eine schematische Draufsicht auf eine zweite Ausgestaltung einer derartigen Anordnung,
- Fig. 3: eine Ausgestaltung zum Behandeln einer Materialbahn mit einer schematischen Darstellung einer ersten Ausgestaltung eines Antriebs und
- Fig. 4: eine Darstellung nach Fig. 3 mit einer zweiten Ausgestaltung eines Antriebs.

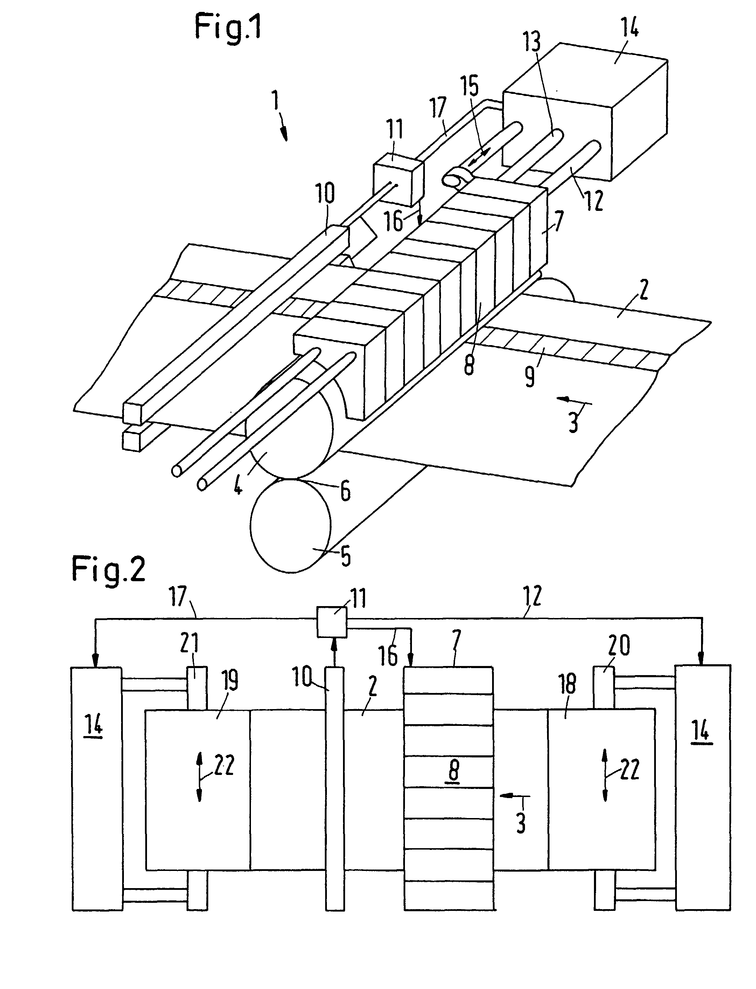

In Fig. 1 ist eine Anordnung 1 zum Behandeln einer Materialbahn 2 dargestellt, die sich in Richtung eines Pfeils 3 bewegt. Die Materialbahn 2 ist hierbei durch einen zwischen zwei Walzen 4, 5 gebildeten Walzenspalt 6 geführt. Beim Durchlaufen des Walzenspaltes 6 wird die Materialbahn 2 komprimiert, d.h. ihre Dicke bzw. ihr Bulk wird beeinflußt. Darüber hinaus wird, je nach Ausbildung der Walzen 4, 5, auch die Oberfläche der Materialbahn 2 beeinflußt, d.h. Glanz und/oder Glätte werden erhöht oder erniedrigt.

Für das vorliegende Ausführungsbeispiel wird davon ausgegangen, daß die Dicke der Materialbahn 2 im Walzenspalt 6 beeinflußt werden soll. Insbesondere soll die Dicke, die hier den Zielparameter bildet, über die Breite der Materialbahn (das ist die Richtung senkrecht zum Pfeil 3) konstant eingestellt werden.

Eine Grobeinstellung läßt sich dann vornehmen, wenn eine der beiden Walzen 4, 5 als Durchbiegungseinstellwalze ausgebildet ist. Um jedoch eine feinere Auflösung der Dickeneinstellung zu erreichen, ist eine Behandlungseinrichtung 7 vorgesehen, die den Durchmesser der Walze 4 durch Temperaturbeaufschlagung lokal beeinflussen kann. Zur Temperaturbeaufschlagung kann man beispielsweise Warm- oder Kaltluftdüsen verwenden, eine Infrarot-Heizung oder eine induktive Beheizung der Walze 4. Derartige Beeinflussungsmöglichkeiten sind bekannt. Die Behandlungseinrichtung 7 weist hierzu eine Vielzahl von Zonen 8 auf, wobei jede Zone einzeln und getrennt von den übrigen Zonen ansteuerbar ist. So kann beispielsweise jede Zone eine eigene Luftdüse aufweisen, durch die entsprechend temperierte Luft auf die Oberfläche der Walze 4 geblasen wird. Eine Zone beeinflußt daher einen Streifen 9 der Materialbahn, der in dem dargestellten Ausführungsbeispiel zur Verdeutlichung schraffiert ist.

Die Wirkung der Behandlungseinrichtung 7 wird mit einer Meßbrücke 10 erfaßt, die in Laufrichtung 3 der Materialbahn 2 hinter dem Walzenspalt 6 angeordnet ist. Anstelle der dargestellten stationären Meßbrücke 10 kann auch ein traversierender Meßaufnehmer vorgesehen sein, der die Dicke der Materialbahn 2 kontinuierlich ermittelt, indem er in Querrichtung über die Materialbahn hin- und herbewegt wird. Unabhängig von der Art der verwendeten Meßeinrichtung wird die Dicke der Materialbahn 2 jedoch an mehr Punkten ermittelt, als die Behandlungseinrichtung 7 Zonen 8 aufweist.

Die Meßbrücke 10 ist mit einer Auswerteeinrichtung 11 verbunden, die für jeden Meßpunkt den ermittelten Ist-Wert mit einem vorgegebenen Soll-Wert vergleicht und die Abweichung zwischen Soll- und Ist-Wert bildet. Entsprechend der Abweichung wird nun die betreffende Zone 8 der Behandlungseinrichtung 7 angesteuert mit dem Ziel, die Abweichung zwischen Ist- und Soll-Wert zu minimieren. Hierdurch versucht man, das sich in Querrichtung der Materialbahn 2 ergebende Ist-Profil dem vorgegebenen Soll-Profil anzugleichen, insbesondere eine gleichförmige Dicke zu erzielen.

Nun kann es vorkommen, daß innerhalb einer Zone 8 bzw. innerhalb eines Streifens 9 der Materialbahn höchst unterschiedliche Abweichungen zwischen Soll- und Ist-Wert vorliegen. So kann beispielsweise die Abweichung von einem Rand des Streifens 9 zum anderen Rand des Streifens 9 ansteigen, beispielsweise so, daß die größte Abweichung zwischen Sollund Ist-Wert genau auf der Grenze zwischen zwei Streifen 9 liegt. Korrigiert man nun diese Abweichung im Grenzbereich, ergibt sich automatisch eine Verschlechterung, d.h. eine Vergrößerung der Abweichungen in den übrigen Bereichen der Zone.

Um dieses Problem zu verkleinern, ist die Behandlungseinrichtung 7 an Gleitstangen 12, 13 so aufgehängt, daß sie quer zur Laufrichtung 3 der Materialbahn 2 verschoben werden kann. Die Verschiebung selbst wird durch einen Antrieb 14 gesteuert, der mit Hilfe eines Antriebsarmes 15 die Behandlungseinrichtung 7 hin- und herbewegen kann. Die Hublänge des Antriebarms 15 beträgt mindestens die Breite einer Zone 8. Die Behandlungseinrichtung 7 ist aus einer Neutralstellung jeweils mindestens um eine halbe Zonenbreite nach links und mindestens um eine halbe Zonenbreite nach rechts bewegbar.

Die Auswerteeinrichtung 11 ist, wie dies durch einen Pfeil 16 angedeutet ist, mit der Behandlungseinrichtung 7 zum Steuern der einzelnen Zonen 8 und über eine Leitung 17 mit dem Antrieb 14 für die Behandlungseinrichtung 17 verbunden.

Die Anordnung 1 arbeitet nun wie folgt:

Die Materialbahn 2 wird durch den Walzenspalt 6 geleitet. Mit der Meßbrücke 10 wird ihre Dicke ermittelt. Bei Abweichungen zwischen dem Ist-Profil und dem Soll-Profil werden nun die einzelnen Zonen 8 so eingestellt, daß die Abweichungen minimiert werden. Hierzu kann man beispielsweise das Kriterium der Fehlerquadrate verwenden, deren Summe so klein wie möglich gemacht werden soll. Andere Kriterien zum Feststellen der Minimierung der Abweichung sind natürlich ebenfalls möglich. Alsdann wird der Punkt in Quer- oder Breitenrichtung der Materialbahn 2 festgestellt, an dem die Abweichung zwischen dem Ist-Wert und dem Soll-Wert am größten ist. Die Behandlungseinrichtung 7 wird nun quer zur Materialbahn 2 so verschoben, daß die Mitte der Zone 8, in deren Einflußbereich die größte Abweichung zwischen Soll- und Ist-Wert vorliegt, über den Ort der größten Abweichung verschoben wird. Dies führt natürlich dazu, daß sich die Dickenwerte in anderen Materialbahnbereichen ändern. Die einzelnen Zonen 8 der Behandlungseinrichtung 7 werden daher wieder neu eingestellt, bis die Summe der Fehlerquadrate (oder ein anderes Kriterium) minimal ist. Nun vergleicht man diese zweite Summe der Fehlerquadrate mit der zuvor ermittelten ersten Summe der Fehlerquadrate. Falls die zweite Summe größer ist als die erste Summe, wird die Verschiebung der Behandlungseinrichtung 7 wieder rückgängig gemacht. Ist allerdings die zweite Summe kleiner als die erste Summe, wiederholt man den ersten Schritt, d.h. man ermittelt wieder den Ort der größten Abweichung und verschiebt die Behandlungseinrichtung 7 so, daß die Mitte der zuständigen Zone 8 über den Ort der größten Abweichung liegt. Anstelle der Mitte einer Zone 8 kann man auch andere Punkte der Zone verwenden, die entweder im vorhinein bestimmt sind oder mit Hilfe der Größe oder der Lage der größten Abweichung bestimmbar sind. Nach dem erneuten Verschieben ermittelt man wiederum die Summe der Fehlerquadrate, nachdem die einzelnen Zonen eingestellt worden sind. Falls diese Summe kleiner ist als die vor dem Verschieben der Behandlungseinrichtung 7 ermittelten Summe, wird das Verfahren wiederholt. Falls die Summe größer ist, wird die Verschiebung rückgängig gemacht. Auf diese Weise nähert man sich iterativ der optimalen Einstellung für den Zielparameter in Querrichtung an.

Im in Fig. 1 dargestellten Ausführungsbeispiel wurde die Dicke der Materialbahn 2 eingestellt, und zwar mit Hilfe der Walzen 4, 5, wobei die Behandlungseinrichtung 7 über die Walze 4 indirekt auf die Materialbahn 2 wirkt. Das Verfahren läßt sich aber genauso dann anwenden, wenn die Behandlungseinrichtung 7 direkt auf die Materialbahn 2 wirkt, beispielsweise die Materialbahn 7 beheizt oder befeuchtet oder im Walzenspalt 6 zwischen den Walzen 4 und 5 ein anderer Parameter als die Dicke beeinflußt wird, beispielsweise Glanz oder Glätte. Auch die Stoffauflaufblende kann beim Herstellen einer Papierbahn als Behandlungseinrichtung 7 verwendet werden. Sie weist üblicherweise mehrere in Querrichtung verteilte Spindeln auf, mit deren Hilfe das Flächengewicht in Querrichtung eingestellt werden kann.

Während im Ausführungsbeispiel nach Fig. 1 die Behandlungseinrichtung 7 verschoben wird, während die Materialbahn 2 zumindest in Querrichtung stationär geführt ist, zeigt Fig. 2 ein anderes Ausführungsbeispiel, bei dem die Behandlungseinrichtung einrichtung 7 stationär ist und die Materialbahn 2 in bewegt wird. Elemente, die denen der Fig. 1 entsprechen, sind mit gleichen Bezugszeichen versehen.

Die Materialbahn 2 wird von einer ersten Rolle 18 abgewickelt und auf eine zweite Rolle 19 aufgewickelt. Beide Rollen sind in Gerüsten 20, 21 aufgehängt, in denen sie durch je einen Antrieb 14 in Richtung des Doppelpfeiles 22 verschoben werden können. Die Steuerung der Antriebe 14 erfolgt dabei durch die Auswerteeinrichtung 11, die auch die einzelnen Zonen 8 der Behandlungseinrichtung 7 über die Leitung 16 steuert.

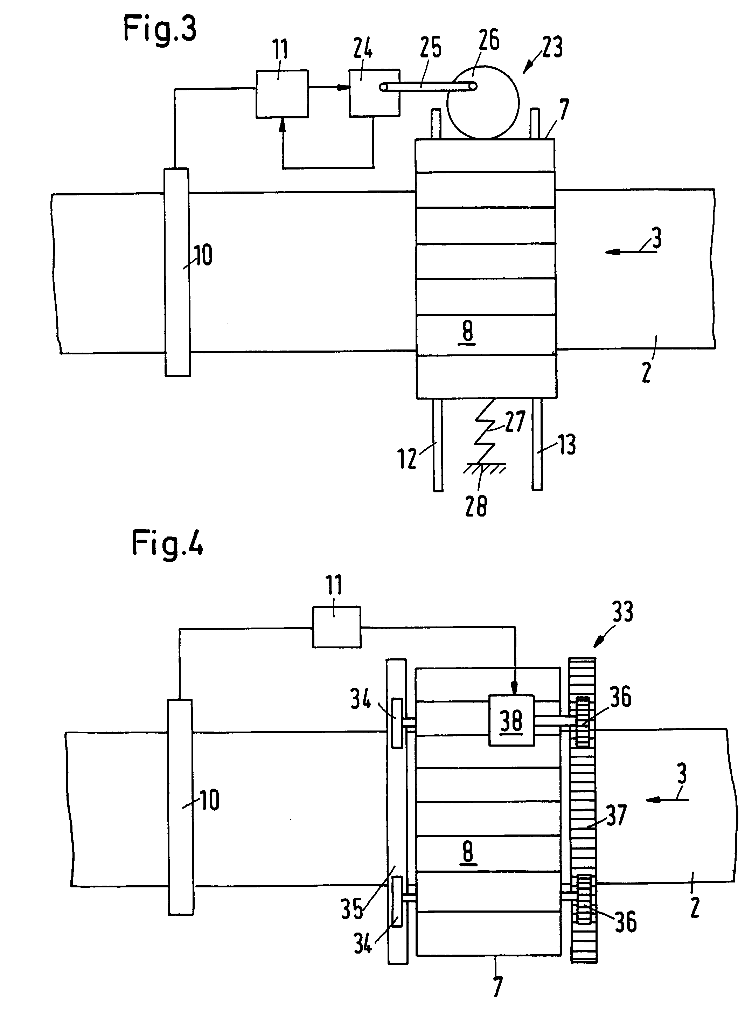

Fig. 3 zeigt schematisch einen Antrieb 23 für die Bewegung der Behandlungseinrichtung 7. Die Behandlungseinrichtung 7 ist, wie im Ausführungsbeispiel nach Fig. 1, an Gleitstangen 12, 13, die sich quer zur Laufrichtung 3 der Materialbahn 2 erstrecken, verschiebbar aufgehängt.

Der Antrieb 23 weist einen Schrittmotor 24 auf, der über eine schematisch dargestellte Antriebswelle 25 mit einer Exzenterscheibe 26 verbunden ist, an der die Behandlungseinrichtung 7 anliegt. Die Anlage wird durch die Kraft einer auf der gegenüberliegenden Seite angeordneten Feder 27, die zwischen der Behandlungseinrichtung 7 und einer stationären Wand 28 angeordnet ist, bewirkt.

Der Schrittmotor 24 wird über die Auswerteeinrichtung 11 angesteuert. Der Schrittmotor 24 kann seine Position an die Auswerteeinrichtung 11 zurückmelden. Da die Position des Schrittmotors 24, d.h. seine Winkelstellung, unmittelbar mit der Winkelstellung der Exzenterscheibe 26 korrelliert ist, "weiß" die Auswerteeinrichtung 11 jederzeit, in welcher Position sich die Behandlungseinrichtung 7 befindet.

Ein anderer Antrieb 33 für die Behandlungseinrichtung 7 ist in Fig. 4 dargestellt. Hier ist die Behandlungseinrichtung 7 mit Hilfe zweier Räder 34 auf einer Schiene 35 und mit Hilfe zweier Ritzel 36 auf einer Zahnstange 37 abgestützt. Eines der beiden Ritzel 36 ist durch einen Schrittmotor 38 angetrieben, der wiederum von der Auswerteeinrichtung 11 angesteuert wird.

## Patentansprüche

1. Verfahren zum Behandeln einer Materialbahn (2) mit Hilfe einer sich über die Materialbahnbreite erstreckenden Behandlungseinrichtung (7), an der die Materialbahn (2) in Längsrichtung (3) vorbeibewegt wird und die in Querrichtung (22) in mehrere, einzeln ansteuerbare benachbarte Zonen (8) unterteilt ist, bei dem hinter der Behandlungseinrichtung (7) in Querrichtung ein Ist-Profil eines vorbestimmten Zielparameters ermittelt wird, das Ist-Profil mit einem Soll-Profil des Zielparameters verglichen wird und die Zonen (8) der Behandlungseinrichtung (7) in Abhängigkeit von Unterschieden zwischen Ist-Profil und Soll-Profil angesteuert werden, **dadurch gekennzeichnet,** daß zur Verringerung der Unterschiede die Behandlungseinrichtung (7) und die Materialbahn (2) in Querrichtung (22) relativ zueinander verschoben werden.

2. Verfahren nach Anspruch 1, dadurch gekennzeichnet, daß vor jedem Verschieben jede Zone (8) zunächst so eingestellt wird, daß die Abweichung zwischen Soll- und Ist-Profil minimiert wird.

3. Verfahren nach Anspruch 1 oder 2, dadurch gekennzeichnet, daß die Behandlungseinrichtung (7) und die Materialbahn (2) so zueinander verschoben werden, daß ein vorbestimmter oder aufgrund der Lage oder Größe der größten Abweichung ermittelbarer Punkt einer Zone (8) an den Ort der größten Abweichung zwischen Soll- und Ist-Profil verbracht wird.

4. Verfahren nach Anspruch 3, dadurch gekennzeichnet, daß die Mitte einer Zone (8) an den Ort der größten Abweichung verschoben wird.

5. Verfahren nach Anspruch 3 oder 4, dadurch gekennzeichnet, daß nach dem Verschieben
a) eine zweite Summe der Fehlerquadrate zwischen Soll- und Ist-Wert gebildet und mit einer vor dem Verschieben gebildeten ersten Summe der Fehlerquadrate verglichen wird,
b) daß, wenn die zweite Summe kleiner als die erste Summe ist, der Ort der größten Abweichung zwischen Soll-Profil und Ist-Profil ermittelt wird und der Punkt der Zone an den Ort der größten Abweichung verschoben wird,
c) daß, wenn die zweite Summe größer als die erste Summe ist, das Verschieben rückgängig gemacht wird und
d) daß die genannten Schritte a) bis c) solange wiederholt werden, bis Schritt c) notwendig wird.

6. Anordnung zum Behandeln einer Materialbahn (2), die in Längsrichtung (3) an einer Behandlungseinrichtung (7) vorbeiläuft, die sich in Querrichtung (22) zur Materialbahn über die Materialbahnbreite erstreckt und in Querrichtung in mehrere benachbarte Zonen (8) unterteilt ist, die einzeln ansteuerbar sind, dadurch gekennzeichnet, daß die Materialbahn (2) und die Behandlungseinrichtung (7) in Querrichtung relativ zueinander verschiebbar sind.

7. Anordnung nach Anspruch 6, dadurch gekennzeichnet, daß die Behandlungseinrichtung (7) und die Materialbahn (2) um mindestens die Breite einer Zone (8) gegeneinander verschiebbar sind.

8. Anordnung nach Anspruch 6 oder 7, dadurch gekennzeichnet, daß die Materialbahn (2) und die Behandlungseinrichtung (7) in entgegengesetzte Richtungen um mindestens die Breite einer halben Zone (8) gegeneinander verschiebbar sind.

9. Anordnung nach einem der Ansprüche 6 bis 8, dadurch gekennzeichnet, daß eine gegenüber der Behandlungseinrichtung (7) in Querrichtung changierbare Auf- und Abwickeleinrichtung (20, 21) für die Materialbahn (2) vorgesehen ist.

10. Anordnung nach einer der Ansprüche 6 bis 8, dadurch gekennzeichnet, daß die Materialbahn (2) in Querrichtung stationär geführt ist und die Behandlungseinrichtung (7) in Querrichtung gegenüber der Materialbahn (2) bewegbar ist.

11. Anordnung nach Anspruch 10, dadurch gekennzeichnet, daß die Behandlungseinrichtung (7) in Querrichtung von einem Exzenterstößel (26) angetrieben ist.

12. Anordnung nach Anspruch 10, dadurch gekennzeichnet, daß die Behandlungseinrichtung (7) ein mit einer Zahnstange (37) kämmendes und antreibbares Ritzel (36) aufweist.

13. Anordnung nach einem der Ansprüche 10 bis 12, dadurch gekennzeichnet, daß zum Antrieb der Behandlungseinrichtung (7) ein Schrittmotor (24, 38) vorgesehen ist.

## Claims

1. Method for treating a web of material (2) with the aid of a treatment device (7) extending over the width of the web past which device the web (2) is moved in the longitudinal direction (3) and which is divided in the transverse direction (22) into a plurality of individually controllable neighbouring zones (8), in which behind the treatment device (7) in the transverse direction an actual profile of a predetermined target parameter is determined, the actual profile is compared with a desired profile of the target parameter and the zones (8) of the treatment device (7) are controlled as a function of differences between the actual profile and the desired profile, characterised in that to reduce the differences the treatment device (7) and the web (2) are displaced relative to one another in the transverse direction (22) .

2. Method according to Claim 1, characterised in that prior to each displacement each zone (8) is first of all adjusted in such a way that the deviation between the desired and actual profile is minimised.

3. Method according to Claim 1 or 2, characterised in that the treatment device (7) and the web (2) are displaced relative to one another in such a way that a predetermined point or a point determinable on the basis of the position or magnitude of the greatest deviation in a zone (8) is transferred to the location of the greatest deviation between the desired and actual profile.

4. Method according to Claim 3, characterised in that the centre of a zone (8) is shifted to the location of greatest deviation.

5. Method according to Claim 3 or 4, characterised in that after displacement
a) a second sum of the squares of the errors between the desired and actual value is formed and compared with a first sum of the squares of the errors formed prior to displacement,
b) that when the second sum is smaller than the first sum the location of the greatest deviation between the desired profile and actual profile is determined and the point of the zone is shifted to the location of greatest deviation,
c) that when the second sum is greater than the first sum the displacement is reversed and
d) that the aforesaid steps a) to c) are repeated until step c) is needed.

6. Arrangement for treating a web of material (2) which in the longitudinal direction (3) runs past a treatment device (7) which in the direction (22) transverse to the web of material extends over the width of the web and is divided in the transverse direction into a plurality of neighbouring zones (8) which are individually controllable, characterised in that the web of material (2) and the treatment device (7) are displaceable relative to one another in the transverse direction.

7. Arrangement according to Claim 6, characterised in that the treatment device (7) and the web (2) are displaceable relative to one another by at least the width of a zone (8).

8. Arrangement according to Claim 6 or 7, characterised in that the web (2) and the treatment device (7) are displaceable relative to one in opposite directions by at least the width of half a zone (8).

9. Arrangement according to one of Claims 6 to 8, characterised in that a winding and unwinding device (20, 21) traversable in the transverse direction with respect to the treatment device (7) is provided for the web (2) of material.

10. Arrangement according to one of Claims 6 to 8, characterised in that the web (2) is guided to be stationary in the transverse direction and the treatment device (7) is movable in the transverse direction relative to the web of material (2).

11. Arrangement according to Claim 10, characterised in that the treatment device (7) is driven in the transverse direction by an eccentric push rod (26).

12. Arrangement according to Claim 10, characterised in that the treatment device (7) possesses a pinion (36) which can be driven by and meshes with a spur rack (37).

13. Arrangement according to one of Claims 10 to 12, characterised in that a stepping motor (24, 38) is provided for driving the treatment device (7).

## Revendications

1. Procédé pour le traitement d'une bande de matériau (2) à l'aide d'un dispositif de traitement (7) qui s'étend sur la largeur de la bande de matériau, devant lequel la bande de matériau (2) se déplace dans le sens de la longueur (3) et qui est divisé dans le sens transversal (22) en plusieurs zones (8) voisines pouvant être commandées individuellement, dans lequel on détermine derrière le dispositif de traitement (7) dans le sens transversal un profil réel d'un paramètre visé prédéterminé, on compare le profil réel à un profil de consigne du paramètre visé et on commande les zones (8) du dispositif de traitement (7) en fonction de différences entre le profil réel et le profil de consigne, caractérisé en ce que, pour réduire les différences, on déplace le dispositif de traitement (7) et la bande de matériau (2) l'un par rapport à l'autre dans le sens transversal (22).

2. Procédé selon la revendication 1, caractérisé en ce que, avant chaque déplacement, on règle d'abord chaque zone (8) de telle sorte que l'écart entre le profil réel et le profil de consigne est minimisé.

3. Procédé selon la revendication 1 ou 2, caractérisé en ce qu'on déplace le dispositif de traitement (7) et la bande de matériau (2) l'un par rapport à l'autre de telle sorte qu'un point, prédéterminé ou pouvant être déterminé sur la base de la position ou de la grandeur du plus grand écart, d'une zone (8) est amené à l'endroit du plus grand écart entre le profil de consigne et le profil réel.

4. Procédé selon la revendication 3, caractérisé en ce qu'on déplace le centre d'une zone (8) à l'endroit du plus grand écart.

5. Procédé selon la revendication 3 ou 4, caractérisé en ce que, après le déplacement,
a) on forme une deuxième somme des carrés d'erreurs entre la valeur de consigne et la valeur réelle et on la compare avec une première somme de carrés d'erreurs formée avant le déplacement,
b) si la deuxième somme est inférieure à la première somme, on détermine l'endroit du plus grand écart entre le profil de consigne et le profil réel et on déplace le point de la zone à l'endroit du plus grand écart,
c) si la deuxième somme de carrés d'erreurs est supérieure à la première somme de carrés d'erreurs, on annule le déplacement,
d) on répète les étapes a) à c) jusqu'à ce que l'étape c) soit nécessaire.

6. Dispositif pour le traitement d'une bande de matériau (2) qui passe dans le sens de la longueur (3) devant un dispositif de traitement (7) qui s'étend dans le sens transversal (22) par rapport à la bande de matériau sur la largeur de la bande de matériau et qui est divisé dans le sens transversal en plusieurs zones (8) voisines pouvant être commandées individuellement, caractérisé en ce que la bande de matériau (2) et le dispositif de traitement (7) peuvent être déplacés l'un par rapport à l'autre dans le sens transversal.

7. Dispositif selon la revendication 6, caractérisé en ce que le dispositif de traitement (7) et la bande de matériau (2) peuvent être déplacés l'un par rapport à l'autre d'au moins la largeur d'une zone (8).

8. Dispositif selon la revendication 6 ou 7, caractérisé en ce que la bande de matériau (2) et le dispositif de traitement (7) peuvent être déplacés l'un par rapport à l'autre dans des sens opposés d'au moins la largeur d'une moitié de zone (8).

9. Dispositif selon l'une des revendications 6 à 8, caractérisé en ce qu'un dispositif d'enroulement et de déroulement (20, 21) pouvant aller et venir dans le sens transversal par rapport au dispositif de traitement (7) est prévu pour la bande de matériau (2).

10. Dispositif selon l'une des revendications 6 à 8, caractérisé en ce que la bande de matériau (2) est guidée tout en restant immobile dans le sens transversal et le dispositif de traitement (7) est mobile dans le sens transversal par rapport à la bande de matériau (2).

11. Dispositif selon la revendication 10, caractérisé en ce que le dispositif de traitement (7) est entraîné dans le sens transversal par un coulisseau à excentrique (26).

12. Dispositif selon la revendication 10, caractérisé en ce que le dispositif de traitement (7) comporte un pignon (36) pouvant être entraîné et mordant dans une crémaillère (37).

13. Dispositif selon l'une des revendications 10 à 12, caractérisé en ce qu'un moteur pas à pas (24, 38) est prévu pour l'entraînement du dispositif de traitement (7).
